# EUROPEAN PATENT APPLICATION

(11) **EP 4 509 422 A1**
(43) Date of publication of application: **19.02.2025**
(21) Application number: 23191517.4
(22) Date of filing: 15.08.2023
(51) Int. Cl.: B65D 21/08, B65D 25/20, G06Q 10/087

(54) **A PACKAGE FOR USE DURING ITEM PICKING AND FOR USE IN A PARCEL DISTRIBUTION SYSTEM, A PACKAGING SYSTEM FOR PACKAGING ITEMS STORED IN A WAREHOUSE AND METHODS THEREFORE**

(71) Applicant: SwipBox Development ApS, 6400 Sønderborg (DK)
(72) Inventor: Kaczmarek, Allan, 6400 Sønderborg (DK)
(74) Representative: Patrade A/S

(57) **Abstract**

A package (10) for use during item picking and for use in a parcel distribution system, the package (10) comprising
- a base (20), an opposite lid (30) and one or more walls (40) extending between the base (20) and the lid (30) defining an internal space (12), wherein the lid (30) comprising a cover (32) for enabling access to the internal space (12), the cover (32) being closable by one or more reversible fasteners (50); and
- a tag pocket (14) for storing a tag (16); and

wherein the cover (32) comprises an inner facing side (34) facing the internal space (12), when in a closed state (200), the inner facing side (34) comprising a unique visual identifier (36) readable by a visual system; and
wherein the package (10) has
- the closed state (200), where the cover (32) is closed by the one or more fasteners (50) and the internal space (12) is inaccessible, and the unique visual identifier (36) is not visible; and
- an identification state (100), where the internal space (12) is accessible, and the cover (32) is flipped, such that the unique visual identifier (36) is visible.

## Description

### Field of the Invention

The present invention relates to a package for use during item picking and for use in a parcel distribution system. Thereby, items can be packed directly into the package which will be received by the recipient while improving the efficiency during at least the item picking.

The present invention further relates to a packaging system utilizing the package to increase the efficiency of the item picking.

The present invention relates to a method for assigning picking orders to individual packages.

The present invention relates to a method for readying a package for pick-up by a courier.

### Background of the Invention

There is a growing need and political will to reduce the carbon footprint of delivering packages in the postal system. A large part of this carbon footprint is due to the use of cardboard as the cardboard boxes are rarely used more than a single time before some of the cardboard is recycled to form new cardboard. However, the recycling of cardboard also uses a lot of energy.

One proposal to reduce the carbon footprint is to use reusable packages capable of being reused several times. These reusable packages are in most cases more advanced than cardboard packages. The cardboard packages may have foldable parts and are in most cases closed by tape, whereas the reusable packages have a solution which can be opened and closed several times.

A drawback to the reusable packages is that the reusable packages are more expensive both in regards of costs and carbon footprint. Thus, the reusable boxes must be reused a number of times to have a lower carbon footprint. The increased cost of the reusable boxes can be mitigated by adding additional options or by increasing the efficiency of other parts of the distribution from the warehouse to the recipient.

The present invention aims to provide a reusable package, which can used during picking of items at a warehouse and be used in a parcel and postal distribution system.

### Object of the Invention

It is an object of the invention to provide a package for fast and efficient item picking by efficient assignment of a picking order to the individual packages.

It is an object of the invention to provide a packaging system for use in a warehouse, which packaging system is designed for efficient assignment of a picking order to the individual packages.

It is an object of the invention to provide a method for assigning picking orders to individual packages.

It is an object of the invention to provide a method for assigning picking orders to individual packages.

### Description of the Invention

An object of the invention is achieved by a package for use during item picking and for use in a parcel distribution system, the package comprising
- a base, an opposite lid and one or more walls extending between the base and the lid defining an internal space, wherein the lid comprising a cover for enabling access to the internal space, the cover being closable by one or more reversible fasteners; and
- a tag pocket for storing a tag; and
wherein the cover comprises an inner facing side facing the internal space, when in a closed state, the inner facing side comprising a unique visual identifier readable by a visual system wherein the package has
- the closed state, where the cover is closed by the one or more fasteners and the internal space is inaccessible, and the unique visual identifier is not visible; and
- an identification state, where the internal space is accessible, and the cover is flipped such that the unique visual identifier is visible.

The unique visual identifier is positioned on the inner facing side because this makes the unique visual identifier visible when flipping the cover away from the lid i.e., when changing the state to the identification state. Furthermore, the unique visual identifier is not visible when the package is in the closed state.

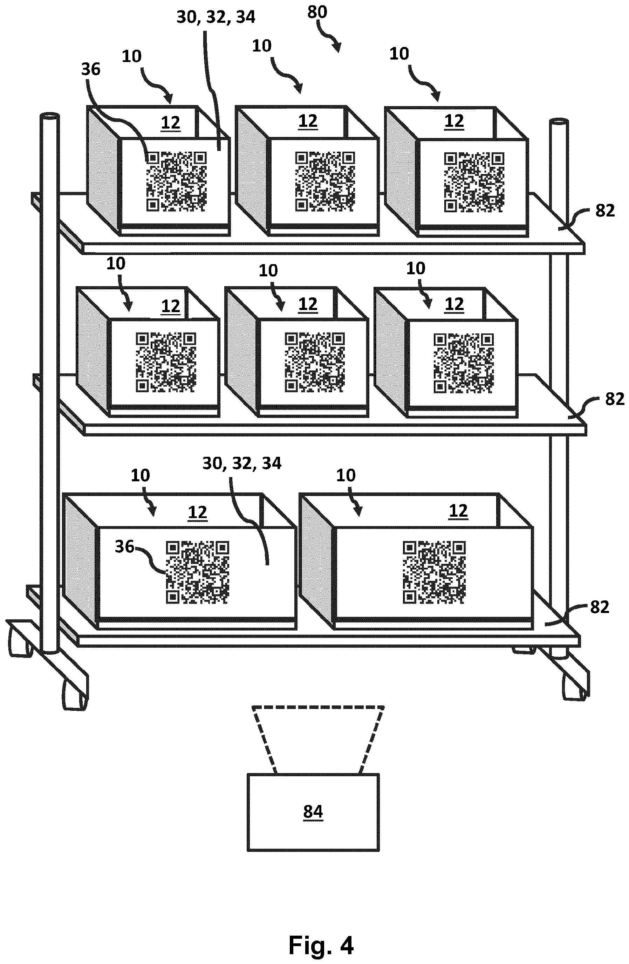

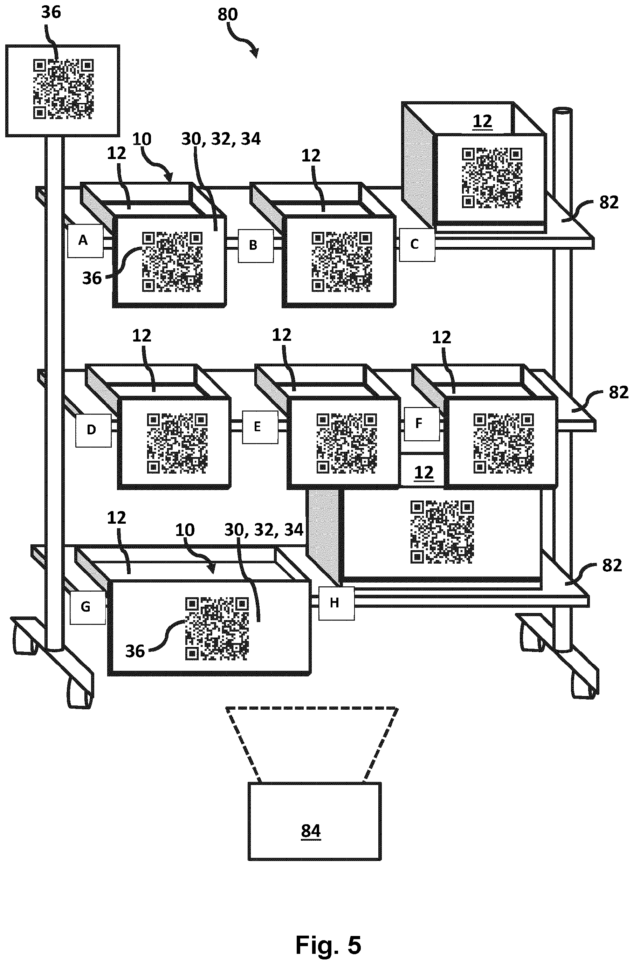

The unique visual identifier enables fast and efficient assignment of a picking order to said package by the visual system. The visual system will be able to identify the unique visual identifier from an image captured by any suitable camera. The visual system may communicate or may form part of a packaging system comprising a global controller having stored a list of picking orders. The global controller can then assign a picking order to said specific package. The specific picking order is then sent to a picker device such that a person picking can pick the items of the picking order. The image may include several unique visual identifiers from several packages stored on a picking cart, similar to, but not limited to, the picking carts shown on figure 4 and figure 5. Thereby, a batch of picking orders can be assigned to the picking cart.

Each picking order can include one, two, three or more items stored on one, two, three or more locations in the warehouse to be sent in the same package.

The package can have any shape or any size as long as the package can be handled by a human. The package will in most cases have a box shape, but the package could have a cylindrical base and cylindrical cross section or oval base and an oval cross section. The package could have any other shape with a base, a lid and one or more walls extending between the base and lid.

The tag pocket may be positioned on one of the walls, or the lid, or the base. The tag pocket may include a transparent surface such that a tag including visual data related to the recipient can be viewed enabling the distribution of the package to the recipient or a location for pick-up of the package by the recipient. However, it is not required that the tag pocket has a transparent surface. In some embodiments, the tag pocket will hold a smart tag comprising a smart tag controller including a processor, a computer readable memory, and a tag communication module to communicate with other devices such that the delivery address can be shared with the courier system either directly from the smart tag or through a distribution system.

The smart tag may include a display such as a bistable display. In the cases wherein the smart tag has a display, then the tag pocket may include a transparent surface to make the display readable.

The cover is preferably attached to the lid or the walls along a connection strip defining a flip axis. The cover will enter the identification state when flipping relative to the flip axis as the unique visual identifier will become visible. The cover may be completely removable from the package by the one or more reversible fasteners, however, the cover may still be attached to the wall or lid such that the cover forms a connection strip along a flip axis. In both embodiments, it is not required that the connection strip is a straight line, the connection strip can have many shapes as long as the cover can flip, thereby revealing the unique visual identifier.

The cover is closable by one or more reversible fasteners. The one or more reversible fasteners allow the package to be reused a plurality of times which will lower the total costs and reduce the material consumption of distributing packages.

In an aspect, the unique visual identifier may be a two-dimensional matrix barcode or a linear barcode or stacked barcode or a character series. The purpose of the unique visual identifier is that it can be identified by a visual system. A two-dimensional matrix barcode, such as QR code, is well known and reliable, however a linear barcode or stacked barcode can also be used as long as the unique visual identifier can be identified by the visual system. The unique visual identifier may be a character series containing number, and/or letters, and/or symbols.

In theory, the unique visual identifier could be a unique image or an image with unique features. In most cases, this will be an over-complicated solution as the data needed to be provided is limited, however the present invention would function with a unique image or an image with unique features. This would require more computation power than a two-dimensional matrix barcode or a linear barcode or stacked barcode or a character series without any significant improvements.

In an aspect, the one or more walls may be collapsible, such that the internal space is variable between
- a minimum volume, where the distance between the base and lid are minimized; and
- a maximum volume, where the distance between the base and lid are maximized. Thereby, the package becomes a foldable package. The foldable package may have any state between the minimum volume and the maximum volume.

The costs of transportation of a package depend on the weight and volume of the package. The collapsibility of the one or more walls enables the package to minimize the volume such that the distribution costs are minimized. The one or more walls do not contain any data relevant to the visual system since the unique visual identifier is positioned on the inner facing side of the cover, thus the walls can be collapsed during picking of items without affecting the identification of the individual packages by the visual system.

The walls may be collapsible while the foldable package is in the identification state and/or closed state, such that the volume of the package is minimized.

In an aspect, the one or more fasteners may be chosen among
- one or more slide fasteners; and/or
- one or more buttons; and/or
- hook and loop tape; and/or
- a permanent magnet interacting with other magnetic material.

The fasteners listed are all reversible such that the state of the package can be changed several times. This enables that the package can be used for several shipment trips before repair or recycling.

The package may be further fitted with a breakable seal before the package is distributed, but this is not required for the invention.

In an aspect, the package may comprise an RFID tag and/or NFC tag including data equivalent to the unique visual identifier, wherein the RFID tag and/or NFC tag being positioned such that a smart tag positioned in the tag pocket is able to read the RFID tag and/or NFC tag.

In this embodiment, the smart tag should include a reader configured for reading the RFID tag and/or NFC tag. The reader may form part of a tag communication module.

Thereby, a smart tag can be positioned inside a tag pocket without the need for preparing the smart tag with relevant information about the package such as a delivery address and/or recipient data.

In some embodiments, the smart tag will be able to communicate with a global controller via wireless communication to receive the necessary data such as delivery address and/or recipient data, wherein the wireless communication is not near field but Wi-Fi, or WLAN, or Bluetooth, or Bluetooth low-energy, NB-IOT or cellular network a combination or a similar wireless protocol. In other embodiments, the smart tag wireless communicates the data equivalent to the unique visual identifier to third party devices via wireless communication, thereby extending the effective wireless range of the package, wherein the wireless communication is not near field but Wi-Fi, or WLAN, or Bluetooth, or Bluetooth low-energy, NB-IOT or cellular network a combination or a similar wireless protocol. The third-party device may then receive data such as a delivery address and/or recipient data from a distribution server as a function of the data equivalent to the unique visual identifier.

The smart tag can be inserted into the tag pocket before picking the items on the picking order or be inserted after all items have been picked.

An object of the invention is achieved by a packaging system for packaging items stored in a warehouse, the packaging system comprises
- a global controller comprising a processor, a computer-readable storage, and a communication module, the computer-readable storage having stored thereon one or more picking orders;
- at least one picking cart comprising one or more racks for placement of a plurality of packages;
- a plurality of packages according to any of the preceding embodiments;
- at least one picker device for providing instructions to a picker; and
- a visual system configured for capturing at least one image of the at least one picking cart with packages in an identification state with visible unique visual identifiers;
wherein the computer-readable storage further having stored thereon a computer program causing the processor to assign a batch of picking orders to the picking cart upon receiving data of the unique digital identifiers of an image of the at least one picking cart with the packages stored on the picking cart and causing the processor to forward the batch of picking orders to a picker device, wherein a specific picking order is associated with a specific package via the unique visual identifier.

The global controller controls, which picking order, that are assigned to a package with a specific unique identifier. The assignment may include additional variables such as number of items and/or size of the items and/or shape of the items i.e., the assignment may be as function of estimated required internal space.

The batch of picking orders may include one, two, three or more picking orders. Each picking order may include one, two, three or more items, wherein the items may be different items. The picking order may include the position of the items within the warehouse. The warehouse may include one, two, three or more picking faces from which one or more different items can be picked. The warehouse may be any known warehouse with one, two, three or more picking faces.

The data of the unique digital identifiers of an image of the at least one picking cart with the packages may be the actual image. However, in the preferred embodiments, the visual system extracts the data of the unique digital identifiers and only forwards the data as this require less bandwidth while extracted data from unique digital identifiers require a low amount of processing power.

In an aspect, the at least one picking cart may have a unique visual identifier. Thereby, the batch of picking orders can be linked to the specific picking cart which enable further tracking of the packages during the picking process. This limits the risk of picking mistakes even further.

In an aspect, the visual system may form part of the picker device. The picker device may be a smart phone or similar smart device including a camera and a device communication module. The smart phone or smart device is able to communicate the captured image to the global controller. Standard digital cameras will be able to capture images of sufficiently high resolution allowing the global controller to identify several unique visual identifiers on a single image.

In an aspect, the plurality of packages may comprise two or more groups of packages with different shape and/or volume of the internal space.

Thereby, the picker can move a picking order from one package to another package with a different shape and/or volume of the internal space. The global controller may have assigned a picking order to a package with an internal space which is too small for storing the items of the picking order, then the picker can assign the picking order to a different package with a larger volume. The assignment of the picking order to a different package can be sent to the global controller via the picker device or a similar device such that the global controller is still able to track the picking order. The same principle can be applied if the package has an internal space which is much larger than required for the picking order or if the shape of the package is not suitable for the picking order.

An object of the invention is achieved by a method for assigning picking orders to individual packages. The method comprising steps of
- providing a picking cart and at least one package according to any of preceding embodiments;
- placing on the picking cart the at least one package;
- flipping the cover of the at least one package, such that the unique visual identifier is visible;
- capturing, using a visual system, an image of the unique visual identifier of the at least one package;
- identifying at least on unique visual identifier stored within the captured image;
- assigning, at a global controller, a batch of picking orders to the at least one package as a function of the identified unique visual identifier, and
- sending the batch of picking orders linked to the at least one package from the global controller to a picker device.

The picking part will typically have one or more rows of storage faces for placement of packages. The racks may be stacked or there may be two or more columns with one or more racks of storage faces. The step of placing is performed by placing the at least one package on the storage face.

The step of flipping the cover is performed such that the package is in the identification state as it allows image capture of the unique visual identifier. In the cases, where two or more packages are placed on the same rack or on stacked racks, then the two or more packages are preferably positioned in the identification state such that the unique visual identifiers are visible on one side of the picking cart as this makes the method more efficient. In theory, the packages, and hens the unique visual identifiers, could be positioned in random directions, however this would not be a less efficient solution, but the method would still work.

The step of capturing can be performed by capturing a video or an image or a series of images. This can be done by a stationary visual system installed in a warehouse or by a picker device including the visual system. The visual system may include a camera. As earlier described, the picker device may be a smart phone or similar smart device.

In the case of a stationary visual system, then the assignment can be performed by the picking cart passing the stationary visual system such that the unique visual identifiers of the packages are identified.

The step of identifying at least one unique visual identifier stored within the captured image can be performed by the visual system or the picker device or the global controller. The computation power required for identifying a two-dimensional matrix barcode or a linear barcode or stacked barcode or a character series is rather limited hence most devices would be able to identify one or more unique visual identifiers.

The unique visual identifier can then be sent to the global controller if not performed by the global controller. The global controller performs the step of assigning a batch of orders to at least one package as a function of the identified unique visual identifier.

In an aspect, the at least one package may include two or more groups of packages with different shape and/or volume of the internal space and the method comprises further steps of
- sending from the picker device to the global controller instruction to reassign at least one picking order from one package in a first group of packages to a package in a second group of packages,
- assigning, at the global controller, the at least one picking order as a function of received reassign instruction.

In some warehouses, the size and/or shape of the individual items is not known or only known with a relatively large uncertainty. Furthermore, the assignment is further complicated by the items being shaped such that two or more items require more storage space than the sum of the individual item's volume.

An object of the invention is achieved by a method for readying a package for pick-up by a courier; the method comprising steps of
- providing a package according to any preceding embodiment, wherein the package is filed with one or more items;
- inserting a smart tag into the tag pocket, the smart tag comprising a smart tag controller, a smart tag energy storage, a smart tag communication module and optionally a display;
- changing state of the package to the closed state;
- linking the smart tag to the package, thereby readying the package for pick-up by a courier.

Thereby, the package can be made ready for pick-up in a fast and efficient manner.

In an aspect, the package may include an RFID tag and/or NFC tag including tag data. The step of linking may then be performed by the smart tag reading the RFID tag and/or NFC tag using the tag communication module and sending the tag data and the unique smart tag identifier to a distribution server. This will further increase the speed of readying a package for pick-up of a courier, as the step is performed automatically by the smart tag without any needed human intervention.

The step of sending tag data and the unique smart tag identifier to a distribution server is also performed by the smart tag communication module.

### Description of the Drawing

Embodiments of the invention will be described in the figures, whereon:
- Fig. 1: illustrates two different embodiments of a package;
- Fig. 2: illustrates a third embodiment of a package;
- Fig. 3: illustrates an embodiment of a package in the identification state;
- Fig. 4: illustrates a picking cart with a plurality of packages in the identification state;
- Fig. 5: illustrates another picking cart with a plurality of packages in the identification state;
- Fig. 6: illustrates part of a packaging system excluding a picking cart;
- Fig. 7: illustrates a cover including a tag pocket;
- Fig. 8: illustrates a smart tag;
- Fig. 9: illustrates a method for assigning picking orders to individual packages; and
- Fig. 10: illustrates a method for readying a package for pick-up by a courier.

### Detailed Description of the Invention

| **Item** | **No** |
|---|---|
| Package | 10 |
| Internal space | 12 |
| Tag pocket | 14 |
| Base | 20 |
| Lid | 30 |
| Cover | 32 |
| Inner facing side | 34 |
| Unique visual identifier | 36 |
| Wall | 40 |
| Main fold line | 42 |
| Angled fold lines | 43 |
| Vertices | 44 |
| Right-angled triangles | 46 |
| Reversible fasteners | 50 |
| RFID tag | 60 |
| NFC tag | 62 |
| Packaging system | 70 |
| Global controller | 72 |
| Processor | 74 |
| Computer-readable storage | 76 |
| Communication module | 78 |
| Picking cart | 80 |
| Rack | 82 |
| Visual system | 84 |
| Picker device | 86 |
| Smart tag | 90 |
| Smart tag controller | 92 |
| Smart tag energy storage | 94 |
| Smart tag communication module | 96 |
| Display | 98 |
| Identification state | 100 |
| Closed state | 200 |
| Method for assigning picking orders to individual packages | 1000 |
| Providing | 1100 |
| Placing | 1200 |
| Flipping | 1300 |
| Capturing | 1400 |
| Identifying | 1500 |
| Assigning | 1600 |
| Sending | 1700 |
| Method for readying a package for pick-up of a courier | 2000 |
| Inserting | 2100 |
| Changing | 2200 |
| Linking | 2300 |
| Reading | 2400 |

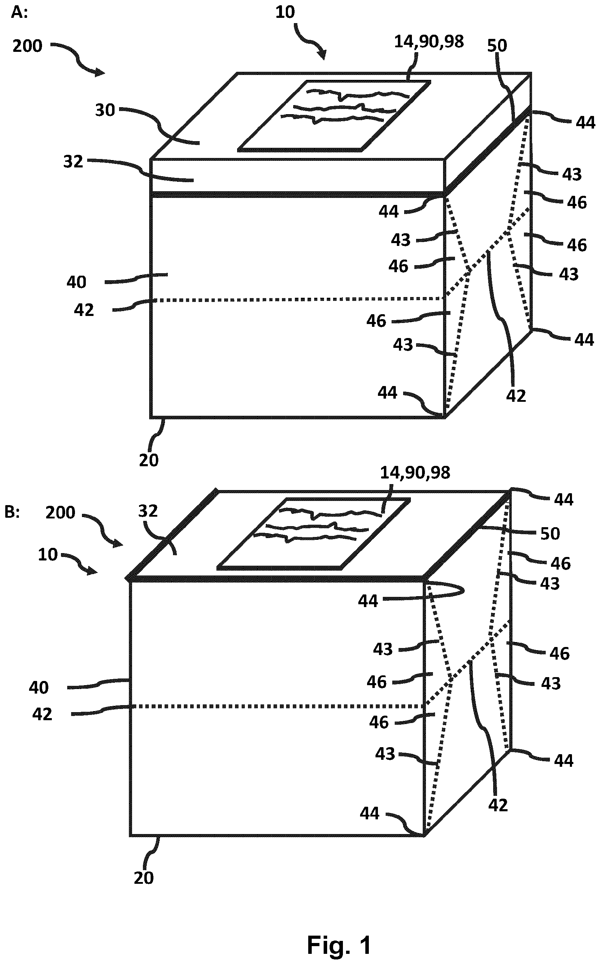

Fig. 1 illustrates two different embodiments of a package 10.

Figure 1A discloses a package 10, which comprises a base 20, an opposite lid 30 and four walls 40 extending between the base 20 and the lid 30 defining an internal space 12. The package 10 is substantially box shaped. Only two walls 40 are shown, however the two not shown walls are substantially similar to the two shown walls 40. The four walls 40 are paired such that opposite walls are substantially similar.

The lid 30 comprises a cover 32 for enabling access to the internal space 12, the cover 32 being closable by one or more reversible fasteners 50 such as one or more slide fastener, and/or one or more buttons, and/or hook and loop tape, and/or a permanent magnet interacting with other magnetic material. The reversibility enables the package to be reused several times such as hundred or thousand times before the package 10 must be recycled or repaired.

The lid 30 further comprises a tag pocket 14 for storing a tag such as a smart tag 90 with a smart tag controller 92, a smart tag energy storage, a smart tag processor 96, and a display 98. The tag pocket 14 can be positioned on the outer side of the lid 30 or the inner side of the lid 30. If positioned on the inner side of the lid 30, then the lid 30 may comprise a transparent foil to make the tag or smart tag 90 visually readable through the transparent foil. The tag pocket 14 could be placed on one of the walls 40. In the shown embodiment the cover 32 is closed and thus, the foldable package 10 is in the closed state 200.

The four walls 40 are collapsible while the foldable package 10 is in the closed state 200. Thereby, the internal space 32 is variable between a minimum volume, where the distance between the base 20 and lid 30 are minimized; and a maximum volume, where the distance between the base 20 and lid 30 are maximized. The volume of the package 10 is then decided by the one or more items stored inside the internal space 12.

Each of the four walls 40 include a main fold line 42 substantially parallel to the other main fold lines 42 and positioned at substantially the same height relative to the base 20. Two opposing walls 40 further comprise angled fold lines 43 extending from vertices 44 towards or to the main fold line 42 of said wall 40, thereby defining four right-angled triangles 46. The figure 1A only shows one of the opposing walls. In other embodiments, the package 10 is not foldable and hence does not comprise fold lines 42 or angled fold lines 43. The package 10 could be foldable in a different way than what is shown in figure 1A.

The four right-angled triangles 46 comprise complementary rigid plane elements positioned in pockets. The two trapezoid faces also comprise complementary rigid plane elements positioned in pockets. The two opposing walls 44 with a main fold line 42 may also comprise two complementary rigid plane elements positioned in pockets. This ensures that the foldable package 10 collapses in a controlled manner. In fact, the foldable package 10 will due to these features have a bias to collapse inwardly such that the foldable package 10 cross section does not increase.

The lid and the base may also include rigid plane elements positioned in pockets for making the foldable package 10 more rigid as this makes collapsing more controllable.

The walls 40 may be made of a recyclable plastic or fabric such as cloth. Preferably the lid 30 and base 20 are also made of plastic or fabric such as cloth. The fold lines 43, 48 may be defined by stitching.

Figure 1B differs from the embodiment shown in figure 1A by the closeable opening 32 and one or more fasteners 50 are positioned at the top face of the foldable package 10. The embodiment of the foldable package 10 in Figure 1B has all the same features of figure 1A for the same reasons. The embodiment of Figure 1B is shown with a design enabling the package 10 to be foldable, however this is not a requirement for the present invention.

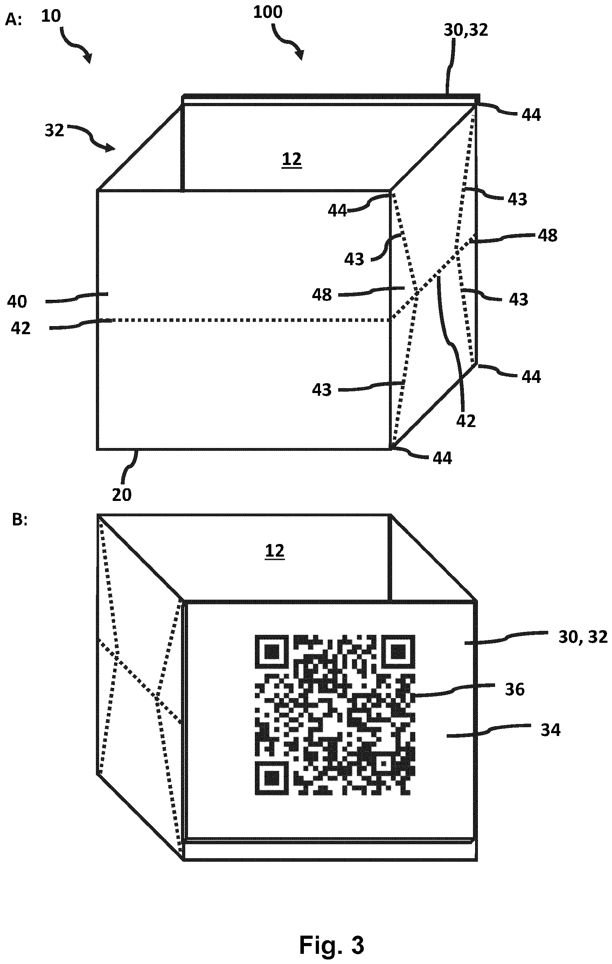

Figure 3 below shows an embodiment of a package 10 in the identification state 100, the shown embodiment could be of either embodiment shown in figure 1A and figure 1B.

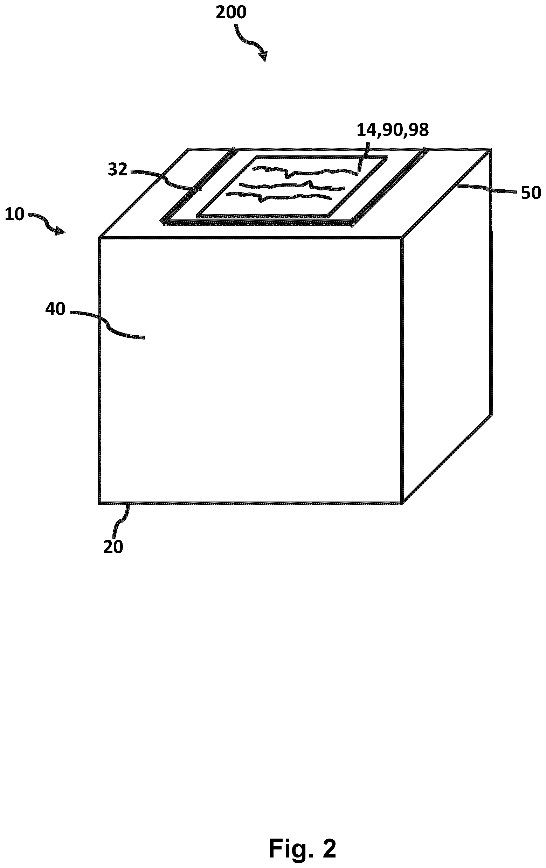

Fig. 2 illustrates a third embodiment of a package 10. The package 10 comprises a base 20, an opposite lid 30 and four walls 40 extending between the base 20 and the lid 30 defining an internal space 12. The package 10 is substantially box shaped, however it could be cylindrical shaped. Only two walls 40 are shown, however the two not shown walls are substantially similar to the two shown walls 40. The four walls 40 are paired such that opposite walls are substantially similar.

The lid 30 comprises a cover 32 for enabling access to the internal space 12, the cover 32 being closable by one or more reversible fasteners 50 such as one or more slide fastener, and/or one or more buttons, and/or hook and loop tape, and/or a permanent magnet interacting with other magnetic material. The reversibility enables the package to be reused several times such as hundred or thousand times before the package 10 must be recycled or repaired. The packages 10 shown in all the figures can be reused for sending new items after a recipient has collected the items stored in the respective packages 10.

The lid 30 further comprises a tag pocket 14 for storing a tag such as a smart tag 90 with a smart tag controller, smart tag processor for controlling a display. The tag pocket 14 can be positioned on the outer side of the lid 30 or the inner side of the lid 30. If positioned on the inner side of the lid 30 then the lid 30 may comprise a transparent foil to make the tag or smart tag 90 visually readable through the transparent foil. The tag pocket 14 could be placed on one of the walls 40. In the shown embodiment the cover 32 is closed and thus, the foldable package 10 is in the closed state 200.

The cover 32 is a smaller part of the entire lid 30 contrary to the two shown embodiments shown in figure 1.

The shown walls 40 are not collapsible like the embodiments shown in figure 1, but the walls could be made collapsible in a similar way or by other means.

Fig. 3 illustrates an embodiment of a package 10 in the identification state 100. The shown package 10 has all the same features of the two embodiments shown in figure 1. The walls 40 of the shown package 10 are made to be collapsible, but this is not a requirement for the present invention. Figure 3A and figure 3B show the package 10 from different angles.

In figure 3B, the cover 32 is flipped such that the package is in the identification state 100 since the inner facing side 34 is visible together with the unique visual identifier 36. The shown unique visual identifier 36 is a QR code, but the invention is not limited to QR codes only. The unique visual identifier 36 could be chosen amongst a two-dimensional matrix barcode or a linear barcode or stacked barcode or a character series. The size of the unique visual identifier 36 depends on the resolution of the visual system and distance between the visual system and the packages when an image is captured. The skilled person would be able to choose a correct size unique visual identifier 36 based on straight forward experiments.

Fig. 4 illustrates a picking cart 80 with a plurality of packages 10 in the identification state 100. The shown picking cart 80 comprises three racks 82 for storing the plurality of packages 10, the picking cart 80 could have any other number of racks 82.

The picking cart 80 has wheels and thus the picking cart 80 is moved by pushing or pulling. The present invention is not limited to the exact shape or design of the picking cart 80 nor is it limited to how the picking cart 80 is displaced. The picking cart could have a motor for displacing of the picking cart 80 or the picking cart 80 could be displaced by a rail system. The picking cart could be an electric picking cart with powered wheels and a battery. The picking cart could be a tow-able picking cart.

Two of the racks 82 have stored thereon three packages 10 of the same size. The third rack 82 has stored thereon two packages 10, which are larger than the packages 10 stored on the two other racks 82. This enables that in case a picking order is assigned to one of the smaller packages 10 and the picker identifies that item or items are two large for the package 10 then the picker can reassign the picking order to one of the larger packages 10. The reverse may also happen where a picking order is reassigned to a smaller package 10 because the picking order can be stored in the smaller package. The picker can reassign by communicating instructions to the global controller using a picker device which may be a smart phone or similar smart device.

The packages 10 are all in the identification state 100 and all covers 32 form a common plane with the inner facing sides having stored thereon the unique visual identifiers 36. In the figure the unique visual identifiers 36 are represented for illustrative purposes by a QR code. If the invention would use QR codes, then each package 10 would have a unique QR code. The unique visual identifier 36 could be a two-dimensional matrix barcode or a linear barcode or stacked barcode or a character series.

The visual system 84 captures an image of the picking cart 80 along with the unique visual identifiers 36 such that a global controller can assign a batch of picking orders to the packages 10 stored on the picking cart 80. The visual system 84 can include a stationary camera wherein the batch of picking orders are assigned when the picking cart passes the visual system 84. The visual system 84 may include several cameras to ensure that a sufficient quality picture is captured of the picking cart 80.

The visual system 84 could form part of the picker device used by the picker. The picker device may be a common smart phone with a camera or a smart device with a camera.

The packages 10 in the figure do not have walls 40 which are foldable or collapsible hence the internal volume 12 is constant.

Fig. 5 illustrates another picking cart 80 with a plurality of packages 10 in the identification state 100. The sum of the packages 10 differ from the packages 10 shown in figure 4 by comprising walls 40 being foldable or collapsible. Thus, five of the packages 10 are shown with their minimum volume, where the distance between the base 20 and lid 30 are minimized when the package 10 is in the closed state. Two package 10 are not foldable and hence illustrate how the foldable packages 10 would be if the foldable packages are positioned at a maximum volume.

The picking cart 80 has wheels and thus the picking cart 80 is moved by pushing or pulling. The present invention is not limited to the exact shape or design of the picking cart 80, nor is it limited to how the picking cart 80 is displaced. The picking cart could have a motor for displacing of the picking cart 80 or the picking cart 80 could be displaced by a rail system. The picking cart could be an electric picking cart with powered wheels and a battery. The picking cart could be a tow-able picking cart. In the shown embodiment, the picking cart 80 is equipped with a unique digital identifier 36.

The picking cart 80 has been fitted with a letters A-H, where each letter corresponds to a specific position on the cart. Thereby the picking order include instructions to the picker such as 1 item from storage "row 32 column 84" into package 10 position on "C". The letters could be replaced by symbols or numbers or characters or a combination.

Two of the racks 82 have stored thereon three packages 10 of the same size. The third rack 82 has stored thereon two packages 10, which are larger than the packages 10 stored on the two other racks 82. This enables that in case a picking order is assigned to one of the smaller packages 10 and the picker identifies that item or items are two large for the package 10 then the picker can reassign the picking order to one of the larger packages 10. The reverse may also happen where a picking order is reassigned to a smaller package 10 because the picking order can be stored in the smaller package. The picker can reassign by communicating instructions to the global controller using a picker device which may be a smart phone or similar smart device.

The packages 10 are all in the identification state 100 and all covers 32 form a common plane with the inner facing sides having stored thereon the unique visual identifiers 36. In the figure the unique visual identifiers 36 are represented for illustrative purposes by a QR code. If the invention would use QR codes, then each package 10 would have a unique QR code. The unique visual identifier 36 could be a two-dimensional matrix barcode or a linear barcode or stacked barcode or a character series.

The visual system 84 captures an image of the picking cart 80 along with the unique visual identifiers 36 such that a global controller can assign a batch of picking orders to the packages 10 stored on the picking cart 80. The visual system 84 can include a stationary camera wherein the batch of picking orders are assigned when the picking cart passes the visual system 84. The visual system 84 may include several cameras to ensure that sufficient quality picture is captured of the picking cart 80.

The visual system 84 could form part of the picker device used by the picker. The picker device may be a common smart phone with a camera or a smart device with a camera.

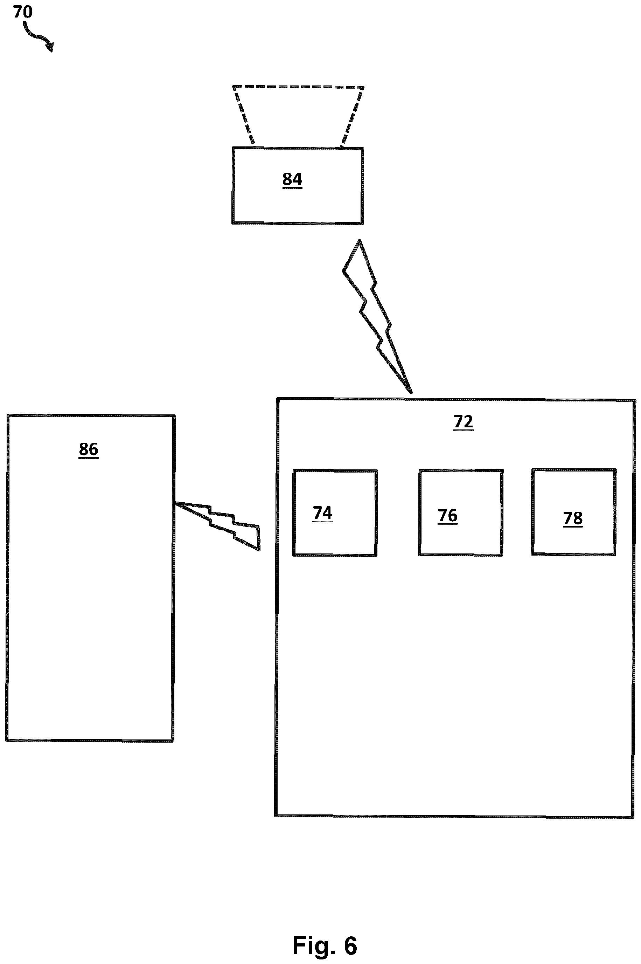

Figure 6 illustrates part of a packaging system 70 excluding a picking cart 80. Examples of a picking cart 80 are disclosed in figure 4 and 5.

The packaging system 70 comprises a global controller 72. The global controller has a processor 74, a computer-readable storage 76, and a communication module 78. the computer-readable storage 76 having stored thereon one or more picking orders. The picking orders may include additional information to which item to pick and the number of said items.

The packaging system 70 further comprises at least one picker device for providing instructions to a picker. Said picker device can be any known picker device as long as it is able to communicate with the global controller 72. Said picker device may be a smart phone or similar smart device.

The packaging system 70 further comprises a visual system 84 configured for capturing at least one image of the at least one picking cart 80 with packages 10 in an identification state 100 with visible unique visual identifiers 36. Examples of packages in the identification state 100 is shown in figures 3 to 5. The visual system may 84 form part of the picker device.

The computer-readable storage further having stored thereon a computer program causing the processor 74 to assign a batch of picking orders to the picking cart 80 upon receiving an image of the at least one picking cart 80 with packages 10 and causing the processor to forward the batch of picking orders to a picker device, wherein a specific picking order is associated with a specific package 10 via the unique visual identifier 36. The batch of picking orders may include one, two, three or more picking orders.

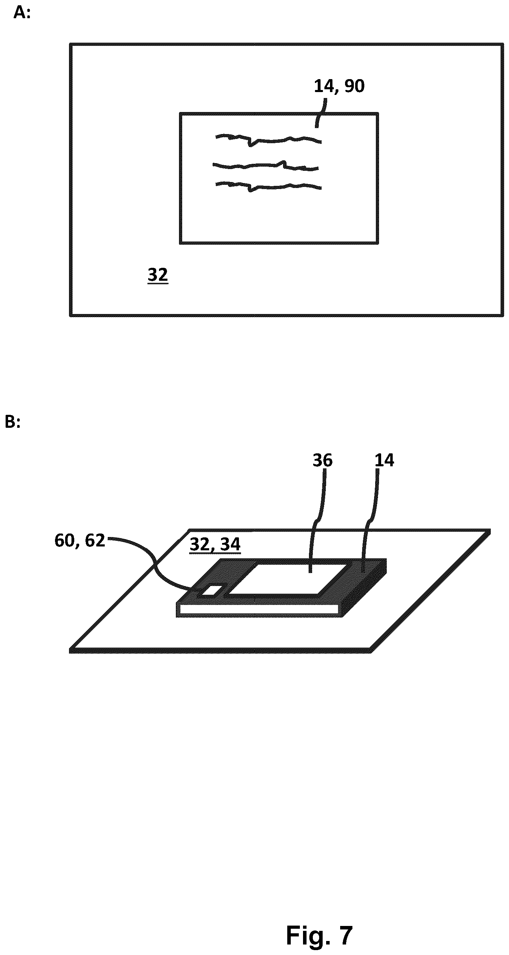

Fig. 7 illustrates a cover 32 including a tag pocket 14 shown from a top view (A) and a bottom view (B), where the inner facing side 34 is visible. The tag pocket 14 is connected to the inner facing side 34. The tag pocket may include a transparent surface such that the tag is visible through the transparent surface, or the cover 32 may have an aperture making the tag visible. However, the tag may be a smart tag 90 without a visual component, however a smart tag 90 may include a display 98. In the shown embodiment, the tag includes a visual component as indicated by the scribbles.

The tag pocket 14 has on the inner facing side 34 a unique digital identifier 36 such that a visual system is able to capture the unique digital identifier 36 when a package 10 is in the identification state 200.

The cover is further equipped with an RFID tag 60 and/or an NFC tag 62 containing data equivalent to the unique digital identifier 36 on the cover 32. The RFID tag 60 and/or the NFC tag 62 are placed on the tag pocket 14 but the RFID tag 60 and/or the NFC tag 62 could be placed on the cover provided that a smart tag positioned on the tag pocket 14 is able to read the RFID tag 60 and/or the NFC tag 62.

If the tag pocket 14 is equipped with a smart tag 90 with a smart tag communication module capable of reading an RFID tag 60 and/or an NFC tag 62 then smart tag 90 will be able to communicate the data equivalent to the unique digital identifier 36 to the global controller such that the smart tag 90 automatically receives the data needed for enabling a courier to deliver the package 10 to the correct recipient. Thereby, a package 10 with a cover 32 similar to the cover shown in figure 7 can fast and efficiently be transformed from a package 10 during picking to a package 10 for distribution.

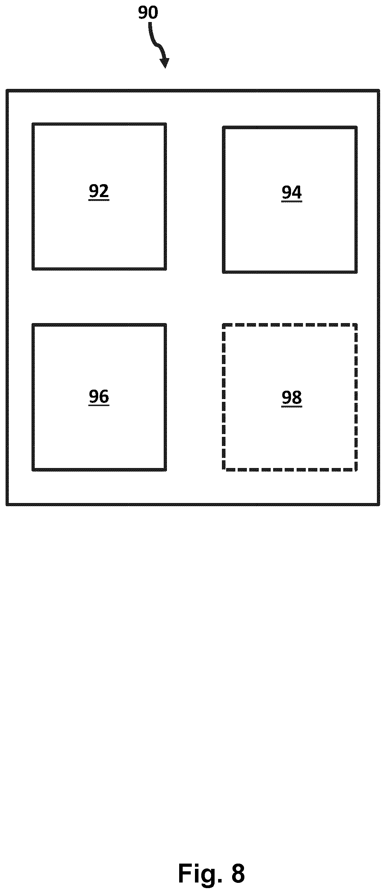

Fig. 8 illustrates a smart tag 90. The smart tag 90 comprises a smart tag controller 92 with a processor and a computer-readable medium, a smart tag energy storage 94 for powering the smart tag 90, a smart tag communication module 96, and optionally a display 98 for displaying information such as information for a courier.

The smart tag energy storage 94 may be a battery or a capacitor such as a super capacitor.

The smart tag communication module 96 may include readers for reading RFID tag 60 and/or an NFC tag 62. The smart tag communication module 96 may include several different wireless communication protocols such as Bluetooth, Bluetooth low-energy, Zig-bee, NB-IOT or similar low-energy communication protocols. Thereby, the smart tag 90 is able to communicate with a global controller 72.

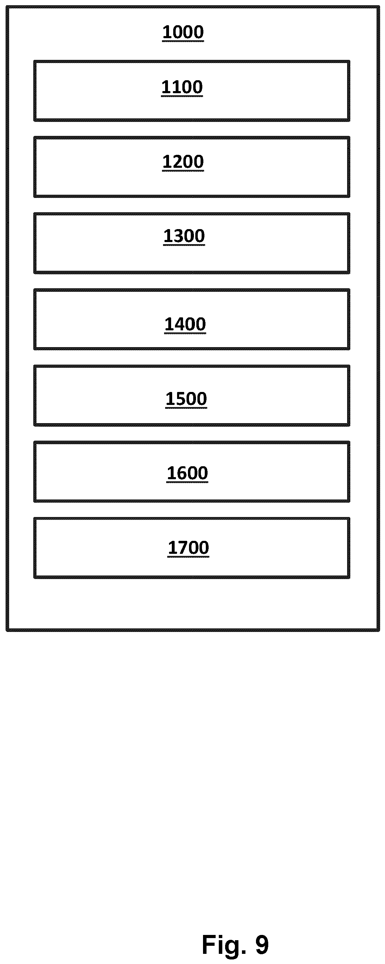

Fig. 9 illustrates a method 1000 for assigning picking orders to individual packages 10. The method 1000 comprises steps of
- providing 1100 a picking cart 80 and at least one package 10 according to any preceding embodiment;
- placing 1200 on the picking cart 80 the at least one package;
- flipping 1300 the cover 32 of the at least one package 10, such that the unique visual identifier 36 is visible;
- capturing 1400, using a visual system 84, an image of the unique visual identifier 36 of the at least one package 10;
- identifying 1500 at least one unique visual identifier 36 stored within the captured image;
- assigning 1600, at a global controller 72, a batch of picking orders to the at least one package 10 as a function of the identified unique visual identifier 36, and
- sending 1700 the batch of picking orders linked to the at least one package 10 from the global controller 72 to a picker device.

The at least one package 10 may include two or more groups of packages with different shape and/or volume of the internal space 12. The method 1000 may comprise further steps of
- sending 1700 from the picker device to the global controller 72 instruction to reassign at least one picking order from one package 10 in a first group of packages to a package 10 in a second group of packages,
- assigning 1600, at the global controller 72, the least one picking order as a function of received reassign instruction.

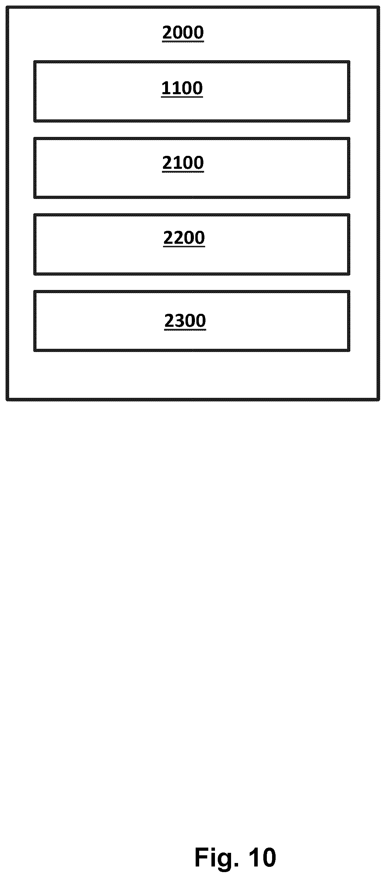

Fig. 10 illustrates a method 2000 for readying a package 10 for pick-up by a courier. The method 2000 comprising steps of
- providing 1100 a package 10 according to any of the preceding embodiments, wherein the package 10 is filed with one or more items;
- inserting 2100 a smart tag 90 into the tag pocket 14, the smart tag 90 comprising a smart tag controller 92, a smart tag energy storage 94, a smart tag communication module 96 and optionally a display 98;
- changing 2200 state of the package 10 to the closed state 200;
- linking 2300 the smart tag 90 to the package 10, thereby readying the package 10 for pick-up by a courier.

The step of linking 2300 may be performed by the smart tag 90 reading the RFID tag 60 and/or NFC tag 62 using the smart tag communication module 96 and sending 1700 the tag data and a unique smart tag identifier to a distribution server.

## Claims

1. A package (10) for use during item picking and for use in a parcel distribution system, the package (10) comprising
- a base (20), an opposite lid (30) and one or more walls (40) extending between the base (20) and the lid (30) defining an internal space (12), wherein the lid (30) comprising a cover (32) for enabling access to the internal space (12), the cover (32) being closable by one or more reversible fasteners (50); and
- a tag pocket (14) for storing a tag (16); and
wherein the cover (32) comprises an inner facing side (34) facing the internal space (12), when in a closed state (200), the inner facing side (34) comprising a unique visual identifier (36) readable by a visual system; and
wherein the package (10) has
- the closed state (200), where the cover (32) is closed by the one or more fasteners (50) and the internal space (12) is inaccessible, and the unique visual identifier (36) is not visible; and
- an identification state (100), where the internal space (12) is accessible, and the cover (32) is flipped, such that the unique visual identifier (36) is visible.

2. A package (10) according to claim 1, wherein the unique visual identifier (36) is a two-dimensional matrix barcode or a linear barcode or stacked barcode or a character series.

3. A package (10) according to claim 1 or 2, wherein the one or more walls (40) are collapsible, such that the internal space (12) is variable between
- a minimum volume, where the distance between the base (20) and lid (30) are minimized; and
- a maximum volume, where the distance between the base (20) and lid (30) are maximized.

4. A package (10) according to anyone of claims 1 to 3, wherein the one or more fasteners (50) are chosen among
- one or more slide fasteners; and/or
- one or more buttons; and/or
- hook and loop tape; and/or
- a permanent magnet interacting with other magnetic material.

5. A package (10) according to any of claims 1 to 4, wherein the package (10) comprises an RFID tag (60) and/or NFC tag (62) including data equivalent to the unique visual identifier (10), wherein the RFID tag (60) and/or NFC tag (62) being positioned such that a smart tag (16) positioned in the tag pocket (14) is able to read the RFID tag (60) and/or NFC tag (62).

6. A packaging system (70) for packaging items stored in a warehouse, the packaging system (70) comprising
- a global controller (72) comprising a processor (74), a computer-readable storage (76), and a communication module (78), the computer-readable storage (76) having stored thereon one or more picking orders,
- at least one picking cart (80) comprising one or more racks (82) for placement of a plurality of packages (10);
- a plurality of packages (10) according to anyone of the preceding claims;
- at least one picker device for providing instructions to a picker; and
- a visual system (84) configured for capturing at least one image of the at least one picking cart (80) with packages (10) in an identification state with visible unique visual identifiers (36); wherein the computer-readable storage further having stored thereon a computer program causing the processor to assign a batch of picking orders to the picking cart (80) upon receiving data of the unique digital identifiers of the packages (10) stored on the picking cart (80) and causing the processor to forward the batch of picking orders to a picker device, wherein a specific picking order is associated with a specific package (10) via the unique visual identifier (36).

7. A packaging system (70) according to claim 6, wherein the at least one picking cart (80) has a unique visual identifier (36).

8. A packaging system (70) according to claim 6 or 7, wherein the visual system (84) forms part of the picker device.

9. A packaging system (70) according to any of claims 6 to 8, wherein the plurality of packages (10) comprise two or more groups of packages with different shape and/or volume of the internal space (12).

10. A packaging system (70) according to claim 9, wherein a picking order is moved from one package (10) to another package (10) with a different shape and/or internal space (12) as a function of received instructions at the global controller (72).

11. A method (1000) for assigning picking orders to individual packages (10); the method (1000) comprising steps of
- providing (1100) a picking cart (80) and at least one package (10) according to any of claims 1 to 5;
- placing (1200) on the picking cart (80) the at least one package;
- flipping (1300) the cover (32) of the at least one package (10), such that the unique visual identifier (36) is visible;
- capturing (1400), using a visual system (84), an image of the unique visual identifier (36) of the at least one package (10);
- identifying (1500) at least one unique visual identifier (36) stored within the captured image;
- assigning (1600), at a global controller (72), a batch of picking orders to the at least one package (10) as a function of the identified unique visual identifier (36), and
- sending (1700) the batch of picking orders linked to the at least one package (10) from the global controller (72) to a picker device.

12. A method (1000) according to claim 11, wherein the at least one package (10) includes two or more groups of packages with different shape and/or volume of the internal space (12) and the method (1000) comprises further steps of
- sending (1700) from the picker device to the global controller (72) instruction to reassign at least one picking order from one package (10) in a first group of packages to a package (10) in a second group of packages,
- assigning (1600), at the global controller (72), the least one picking order as a function of received reassign instruction.

13. A method (2000) for readying a package (10) for pick-up by a courier; the method (2000) comprising steps of
- providing (1100) a package (10) according to any of claims 1 to 5, wherein the package (10) is filled with one or more items;
- inserting (2100) a smart tag (90) into the tag pocket (14), the smart tag (90) comprising a smart tag controller (92), a smart tag energy storage (94), a smart tag communication module (96) and optionally a display (98);
- changing (2200) state of the package (10) to the closed state (200);
- linking (2300) the smart tag (90) to the package (10), thereby readying the package (10) for pick-up by a courier.

14. A method (2000) according to claim 13, wherein the package (10) being according to claim 5, and the step of linking (2300) is performed by the smart tag (90) reading the RFID tag (60) and/or NFC tag (62) using the smart tag communication module (96) and sending (1700) the tag data and a unique smart tag identifier to a distribution server.
